**Europäisches Patentamt**

**European Patent Office**

**Office européen des brevets**

(19)

(11) Veröffentlichungsnummer : **0 099 597**
**B1**

(12) # EUROPÄISCHE PATENTSCHRIFT

(45) Veröffentlichungstag der Patentschrift :
**11.12.85**

(51) Int. Cl.⁴ : **B 60 G 17/02, B 60 G 17/04**

(21) Anmeldenummer : **83200821.3**

(22) Anmeldetag : **07.06.83**

(54) **Pneumatische Steuereinrichtung.**

(30) Priorität : **23.07.82 CH 4511/82**

(43) Veröffentlichungstag der Anmeldung :
**01.02.84 Patentblatt 84/05**

(45) Bekanntmachung des Hinweises auf die Patenterteilung : **11.12.85 Patentblatt 85/50**

(84) Benannte Vertragsstaaten :
**AT BE CH DE FR GB IT LI NL SE**

(56) Entgegenhaltungen :
**AT-B-  300 025**
**CH-A-  543 987**
**DE-A- 1 430 645**
**US-A- 2 505 256**

(73) Patentinhaber : **Werkzeugmaschinenfabrik Oerlikon-Bührle AG**
**Birchstrasse 155**
**CH-8050 Zürich (CH)**

(72) Erfinder : **Chappez, Robert**
**1, Rue Fairet**
**F-92170 Vanves (FR)**

**Beschreibung**

Die Erfindung betrifft eine pneumatische Steuereinrichtung an Schienenfahrzeugen zur Steuerung des Druckes in Luftfederelementen, gemäss dem Oberbegriff des Patentanspruches 1.

Aus der CH-A-543 987 ist eine Steuereinrichtung bekannt, welche den Druck in zwei Luftfederelementen, die aus einem Luftfederbalg sowie einem Niveauregulierventil bestehen, steuert. Der Luftfederbalg beider Luftfederelemente wird aus einem gemeinsamen Druckluftbehälter gespeist. Das Niveauregulierventil sorgt dabei für die Anpassung des Druckes im Luftfederbalg an die Belastung des Fahrzeuges. Beide Luftfederelemente sind über Ueberströmventile sowie Drosseln untereinander verbunden.

Bei dieser Ausführungsform ist ein Druckausgleich zwischen den Luftfederelementen ab einem gewissen Druckunterschied zwischen den beiden Luftfederelementen kurzfristig möglich, jedoch gleicht sich jeder Druckunterschied über die Drosseln aus. Dies hat zur Folge, dass ein unerwünscht hoher Druck in einem Luftfederelement auf das andere Luftfederelement teilweise übertragen wird und anschliessend über das Auslassventil dieses anderen Luftfederelementes abgebaut wird. Ist eines der Luftfederelemente defekt, so ist auf diese Art ein Druckabbau im anderen Luftfederelement nicht mehr möglich.

Aus der AT-B-300 025 ist eine Stabilisierungseinrichtung bekannt, welche die Merkmale des Oberbegriffs des Patentanspruches 1 enthält. Das Druckdifferenzventil ist jedoch zusätzlich über Doppelsitzventile an die Hauptleitung angeschlossen. Ein Ueberdruck in einer Druckkammer des Druckdifferenzventils bewirkt eine zusätzliche Erhöhung in dem zugehörigen, bereits Ueberdruck aufweisenden Luftfederelement sowie gleichzeitig eine Absenkung des Druckes im anderen Luftfederelement.

Die Erfindung, wie sie in den Ansprüchen gekennzeichnet ist, löst die Aufgabe, eine einfache, pneumatische Steuereinrichtung zu schaffen, die starke Druckdifferenzen zwischen den beiden Luftfederelementen abbaut, wobei das auf dem tieferen Druck arbeitende Luftfederelement vom hohen Druck des anderen Luftfederelementes unbeeinflusst bleibt.

Die durch die Erfindung erreichten Vorteile sind darin zu sehen, dass auf ein Abblasventil, das dem Niveauregulierventil zugeordnet ist, verzichtet werden kann, was eine wesentlich vereinfachte Ausgestaltung der Luftfederelemente ergibt. Die so ausgeführte Steuereinrichtung übernimmt auf einfache Weise die Funktion eines Sicherheitsventils, wobei zusätzlich das Druckniveau beider Luftfederelemente als Folge der Belastung des Fahrzeuges berücksichtigt werden kann. Die Druckreduktion in einem Luftfederelement erfolgt nur bis auf ein, der Beladung des Fahrzeuges entsprechendes Niveau. Ferner erfolgt die Druckreduktion nicht wie bei der bekannten Steuereinrichtung über das andere Luftfederelement, sondern direkt über ein Druckdifferenzventil an die Atmosphäre.

Im folgenden wird die Erfindung anhand von einer lediglich einen Ausführungsweg darstellenden Zeichnung näher erläutert. Es zeigt:

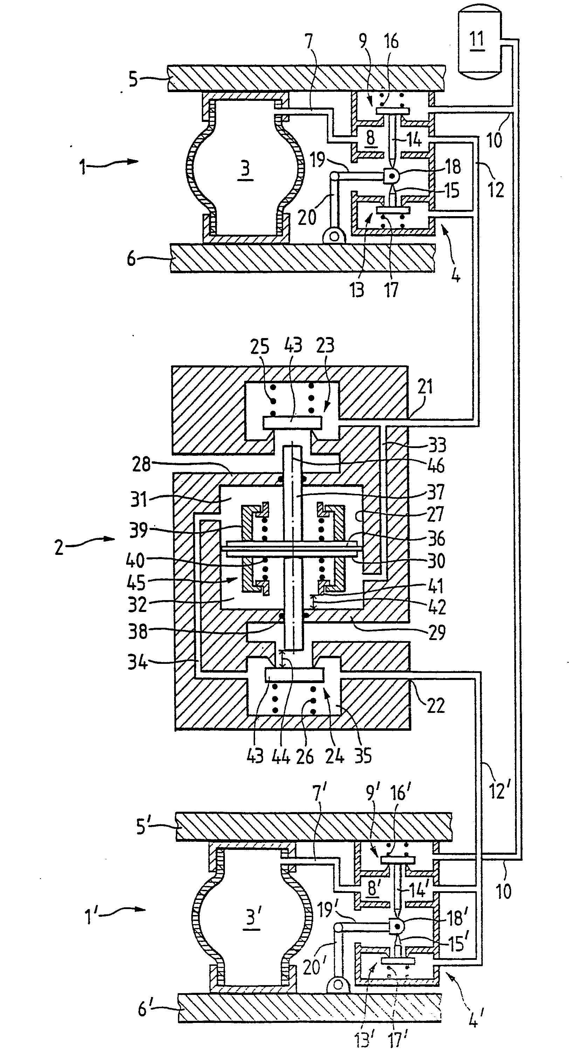

Die einzige Figur in schematischer Darstellung eine pneumatische Steuereinrichtung.

In der einzigen Figur ist eine pneumatische Steuereinrichtung für zwei unter sich gleich ausgebildete Luftfederelemente 1 und 1' dargestellt. Zwischen den Luftfederelementen 1 und 1' ist ein Druckdifferenzventil 2 angeordnet. Die Luftfederelemente 1 und 1' bestehen im wesentlichen aus einem Luftfederbalg 3 bzw. 3' und einem Niveauregulierventil 4 bzw. 4'.

Ein Wagenkasten, von dem nur ein Balken 5 bzw. 5' dargestellt ist, stützt sich über den Luftfederbalg 3, 3' auf einem Fahrgestell ab, von dem nur ein Balken 6 bzw. 6' dargestellt ist. Das ganze Fahrzeug besitzt im allgemeinen vier solche Luftfederelemente 1, von denen in der Zeichnung nur zwei dargestellt sind. Diese beiden Luftfederelemente 1 und 1' sind den beiden auf einer Radachse angeordneten, nicht dargestellten Fahrzeugrädern zugeordnet. Sie können aber auch je einer der nicht dargestellten Fahrzeugachsen zugeordnet sein.

Jeder Luftfederbalg 3, 3' ist über eine Leitung 7 bzw. 7' mit dem Niveauregulierventil 4, 4' verbunden. Die Leitung 7, 7' mündet in eine Kammer 8 bzw. 8', welche über ein Einlassventil 9 bzw. 9' mit einer Leitung 10 verbunden ist. Die Leitung 10 ist an einem Druckluftbehälter 11 angeschlossen. Eine Leitung 12 bzw. 12' verbindet die Kammer 8, 8' über ein Auslassventil 13 bzw. 13' mit der Atmosphäre. Das Einlassventil 9, 9' und das Auslassventil 13, 13' weisen ferner je eine Steuerstange 14 bzw. 14' und 15 bzw. 15' auf, die durch Schliessfedern 16 bzw. 16' und 17 bzw. 17' gegen eine Nockenscheibe 18 bzw. 18' gedrückt werden. Die Nockenscheibe 18 bzw. 18' ist so ausgebildet, dass sie bei einer Drehung im Uhrzeigersinn das Einlassventil 9, 9' öffnet und bei einer Drehung im Gegenuhrzeigersinn das Auslassventil 13, 13' öffnet. Die Nockenscheibe 18, 18' ist über einen Hebel 19 bzw. 19' und eine Lasche 20 bzw. 20' mit dem Balken 6, 6' des Fahrgestelles verbunden. Das Niveauregulierventil 4, 4' ist am Balken 5, 5' des Wagenkastens befestigt.

Die Leitungen 12, 12' der beiden Luftfederelemente 1, 1' münden an Eingängen 21 und 22 in das Druckdifferenzventil 2 und setzen sich bis zu je einer Ventilkammer 35 fort, welche je ein Ventil 23 bzw. 24 enthalten. Die Ventile 23 und 24 verbinden in geöffneter Stellung (Arbeitsstellung) die Leitungen 12, 12' mit der Atmosphäre und werden in Ruhestellung durch einen, von einer Feder 25 bzw. 26 gegen einen Ventilsitz belasteten Ventilkörper 43, geschlossen gehalten. Zwischen den Ventilen 23 und 24 ist ein Druckvergleichselement 45 angeordnet. Dieses besteht aus einem Zylinder 27, mit einer Achse 46, der an beiden Enden durch eine Abschlusswand 28 und 29 abgeschlossen ist. Im Zylinder 27 ist ein Kolben 30 vorgesehen, der den Zylinderinhalt in zwei Druckkammern 31 und 32 aufteilt. Die dem Eingang 21 abgekehrte Druckkammer 32 ist über eine Leitung 33 mit der Leitung 12 verbunden, die den Eingang 21 benützt. Die dem Eingang 22 abgekehrte Druckkammer 31 ist über eine Leitung 34 mit der Leitung 12′ verbunden, die den Eingang 22 benützt, hier allerdings über die Ventilkammer 35 des Ventils 24. Diese ungleiche Anordnung ist nur deshalb vorhanden, weil die Eingänge 21 und 22 auf derselben Seite des Druckdifferenzventils 2 angeordnet sind. Eine symmetrische Leitungsführung ist aber immer möglich, wenn man das Druckdifferenzventil 2 als dreidimensionales Gebilde betrachtet.

Der Kolben 30 ist mit einer Dichtung 36 gegen den Zylinder 27 abgedichtet und über beidseitig angeordnete Stössel 37 durch die Abschlusswände 28 und 29 geführt. Die Stössel 37 sind eines mehrerer möglicher Mittel, die die Verbindung zwischen dem Druckvergleichselement 45 — davon insbesondere des Kolbens 30 — und den Ventilen 23 und 24 herstellen und deren Betätigung ermöglichen. Dichtungen 38 dichten auch hier die Druckkammern 31 und 32 gegen die Atmosphäre ab. Vorzugsweise enthält ein beidseitig des Kolbens 30 sich erstreckender Ringkörper 39 durch Federn 40 belasteten Anschläge 41. Nimmt der Kolben 30 eine Mittelstellung, wie sie in der Figur ersichtlich ist, ein, so ergibt sich zwischen den Anschlägen 41 und den Abschlusswänden 28 und 29 je ein Abstand 42 und zwischen den Stösseln 37 und je einem Ventilkörper 43 der Ventile 23 und 24 je ein Freiweg 44. Vorzugsweise sind die Freiwege 44 grösser als die Abstände 42.

Die Wirkungsweise der beschriebenen Steuereinrichtung ist wie folgt :

Wird das Fahrzeug stärker belastet, so werden die beiden Luftfederbälge 3, 3′ zusammengedrückt, und der Balken 5, 5′ nähert sich dem Balken 6, 6′. Dadurch wird die Nockenscheibe 18, 18′ im Uhrzeigersinn geschwenkt und das Einlassventil 9, 9′ geöffnet. Somit kann aus dem Druckluftbehälter 11 durch die Leitung 10, das Einlassventil 9, 9′ und die Leitung 7, 7′ Druckluft in den Luftfederbalg 3, 3′ gelangen. Der Luftfederbalg 3, 3′ dehnt sich aus, wodurch der Wagenkasten mit dem Balken 5, 5′ so weit angehoben wird, bis die Nockenscheibe 18, 18′ wieder in ihre Ausgangslage gelangt ist. Das Einlassventil 9, 9′ schliesst sich dann wieder.

Wird das Fahrzeug entlastet, so kann sich der Luftfederbalg 3, 3′ ausdehnen, und der Balken 5, 5′ des Wagenkastens entfernt sich vom Balken 6, 6′ des Fahrgestells. Dadurch wird die Nockenscheibe 18, 18′ im Gegenuhrzeigersinn geschwenkt und das Auslassventil 13, 13′ geöffnet. Nun kann aus dem Luftfederbalg 3, 3′ durch die Leitung 7, 7′, die Leitung 12, 12′ und das Auslassventil 13, 13′ Luft in die Atmosphäre strömen.

Der Luftfederbalg 3, 3′ wird beim Ausströmen der Luft zusammengedrückt, und die Nockenscheibe 18, 18′ wird wieder in ihre Ausgangslage zurückgeschwenkt, so dass sich das Auslassventil 13, 13′ wieder schliesst.

Wird das Fahrzeug unregelmässig belastet, so dass im Luftfederbalg 3 ein grösserer Druck herrscht als im Luftfederbalg 3′, so wird der Kolben 30 im Zylinder 27 des Druckdifferenzventils 2 nach oben verschoben, bis der obere Anschlag 41 gegen die Abschlusswand 28 stösst. Je nach der Druckdifferenz zwischen den Druckkammern 32 und 31 bzw. zwischen dem Luftfederbalg 3 und 3′ wird die Feder 40 in der Druckkammer 31 zwischen dem Anschlag 41 und dem Kolben 30 dabei mehr oder weniger stark zusammengedrückt. Da in der hier gezeigten vorzugsweisen Ausführung der Abstand 42 kleiner ist als der Freiweg 44, wird bei kleineren Druckdifferenzen in den Druckkammern 31 und 32 das Ventil 23 nicht betätigt. Erst bei grösseren Druckdifferenzen stösst der Stössel 37 an den Ventilkörper 43 und stösst ihn gegen die Kraft der Feder 25 nach oben. Dadurch wird der Luftfederbalg 3 über Leitung 7, Kammer 8, Leitung 12 und Ventilkammer 35 mit der Atmosphäre verbunden. So senkt sich der Druck im Luftfederbalg 3 ab und der Kolben 30 bewegt sich wieder abwärts. Seine Abwärtsbewegung geht zu Ende, wenn das Ventil 23 wieder geschlossen ist. Es bleibt eine Druckdifferenz zwischen dem Luftfederbalg 3 und 3′ erhalten. Diese Druckdifferenz wird durch die Differenz zwischen Freiweg 44 und Abstand 42, sowie durch die Federkonstante der Feder 40 bestimmt. Die hier gezeigte Steuereinrichtung erlaubt es somit, zwischen den beiden Luftfederelementen 1 und 1′ eine Druckdifferenz aufrecht zu erhalten. Sie erlaubt ferner die zulässige Druckdifferenz zu begrenzen. Dies geschieht durch Einbau einer Feder 40 mit einer an diese Begrenzung angepassten Federkonstanten. Die Steuereinrichtung erlaubt es ferner, beispielsweise einen in einem Luftfederelement 1 auftretenden Drucküberschuss zum andern Luftfederelement 1′ direkt über das Ventil 23 in die Atmosphäre abzuleiten. Dies ist insbesondere auch bei einem defekten Luftfederelement möglich. Weist beispielsweise der Luftfederbalg 3′ einen für den Beladungszustand des Wagens überhöhten Druck auf, weil das Auslassventil 13′ defekt ist, so bewegt sich als Folge davon der Kolben 30 im Zylinder 27 nach unten. Ist der Ueberdruck gross genug, so erfolgt durch Oeffnung des Ventils 24 eine Druckabsenkung im Luftfederbalg 3′. Während dieses Vorgangs ist die Arbeit des Luftfederelementes 1 ungestört.

**Patentansprüche**

1. Pneumatische Steuereinrichtung an Schienenfahrzeugen zur Steuerung des Druckes in Luftfederelementen (1, 1′) mit einem mit den Luftfederelementen verbundenen Druckdifferenzventil (2), enthaltend zwei durch einen Kolben (30), der beidseitig mit je einem Stössel (37) versehen ist, getrennte Druckkammern (31, 32) und zwei beiderseits stirnseitig zum Kolben (30) angeordnete Ventilkammern (35), welche je mit der auf der andern Seite des Kolbens (30) liegenden Druckkammern (31, 33) und mit einer der Luftfederelemente (1, 1') verbunden sind, dadurch gekennzeichnet, dass die Ventilkammern (35) je ein Ventil (23, 24) aufweisen, das bei einem bestimmten Ueberdruck in der angeschlossenen Druckkammer (32, 31) vom Stössel (37) gegen den Druck einer Feder (25, 26) geöffnet wird, zum Ablassen des Ueberdruckes in die Atmosphäre.

2. Pneumatische Steuereinrichtung gemäss Anspruch 1, dadurch gekennzeichnet, dass der Kolben (30) beidseitig einen Ringkörper (39) mit einem durch eine Feder (40) belasteten Anschlag (41) aufweist.

3. Pneumatische Steuereinrichtung gemäss Anspruch 2, dadurch gekennzeichnet, dass in Mittelstellung des Kolbens (30) je zwischen einem der Anschläge (41) und der zugeordneten Abschlusswand (28, 29) ein Abstand (42) sowie einem der Stössel (37) un dem zugeordneten Ventilkörper (43) ein Freiweg (44) besteht, wobei jeder Freiweg (44) grösser ist, als der zugeordnete Abstand (42).

4. Pneumatische Steuereinrichtung gemäss Anspruch 2, dadurch gekennzeichnet, dass die Federkonstante der Federn (25, 26) der Ventile (23, 24) kleiner ist als diejenige der Federn (40) am Kolben (30).

**Claims**

1. Pneumatic control device on rail vehicles for controlling the pressure in pneumatic spring elements (1, 1'), having a pressure differential valve (2) connected to the pneumatic spring elements and containing two pressure chambers (31, 32) separated by a piston (30), which, on both sides, is provided in each case with a ram (37), and two valve chambers (35) which are arranged on both sides towards the end face of the piston (30), are connected in each case to pressure chambers (31, 33) located on the other side of the piston (30) and are connected to one of the pneumatic spring elements (1, 1'), characterised in that the valve chambers (35) each have a valve (23, 24) which, at a certain excess pressure in the connected pressure chamber (32, 31), is opened by the ram (37) against the pressure of a spring (25, 26) in order to let off the excess pressure to the atmosphere.

2. Pneumatic control device according to Claim 1, characterised in that the piston (30), on both sides, has an annular body (39) having a stop (41) loaded by a spring (40).

3. Pneumatic control device according to Claim 2, characterised in that, in the centre position of the piston (30), there is a spacing (42) in each case between one of the stops (41) and the allocated closure wall (28, 29) and also a free path (44) between one of the rams (37) and the allocated valve body (43), with each free path (44) being greater than the allocated distance (42).

4. Pneumatic control device according to Claim 2, characterised in that the spring rate of the springs (25, 26) of the valves (23, 24) is smaller than that of the springs (40) at the piston (30).

**Revendications**

1. Installation de contrôle pneumatique pour des véhicules sur rails, pour contrôler la pression dans les éléments à ressort pneumatique (1, 1'), avec une soupape de différence de pression (2) reliée aux éléments à ressort pneumatique, ayant deux chambres de pression (31, 32) séparées par un piston (30) qui comporte de chaque côté un poussoir (37) et deux chambres de soupape (35) prévues de part et d'autre de la face frontale du piston (30), et qui sont reliés à l'un des éléments à ressort pneumatique (1, 1'), caractérisée en ce que les chambres de soupape (35) comportent chacune une soupape (23, 24) qui pour une certaine surpression dans la chambre de pression (32, 31) correspondante, est ouvert par un poussoir (37) agissant contre la pression d'un ressort (25, 26) pour évacuer la surpression à l'atmosphère.

2. Installation de contrôle pneumatique selon la revendication 1, caractérisée en ce que le piston (30) comporte des deux côtés un corps annulaire (39) avec une butée (41) chargée par un ressort (40).

3. Installation de contrôle pneumatique selon la revendication 2, caractérisée en ce qu'en position médiane du piston (30), entre une butée (41) et la cloison de fermeture (28, 29) correspondante, il est prévu une distance (42), ainsi qu'entre le poussoir (37) et le corps de soupape (43) correspondant, il est prévu une course libre (44), chaque course libre (44) étant supérieure à la distance (42) correspondante.

4. Installation de contrôle pneumatique selon la revendication 2, caractérisée en ce que la constante élastique des ressorts (25, 26) des soupapes (23, 24) est inférieure à celle des ressorts (40) sur le piston (30).